# EUROPÄISCHE PATENTSCHRIFT

(11) **EP 2 388 167 B1**
(45) Veröffentlichungstag und Bekanntmachung des Hinweises auf die Patenterteilung: **19.06.2013**
(21) Anmeldenummer: 11164231.0
(22) Anmeldetag: 29.04.2011
(51) Int. Cl.: B60R 25/02, H01H 27/06

(54) **Vorrichtung zur Ansteuerung eines Sperrgliedes**
Device for operating a blocking element
Dispositif de commande d'un organe de verrouillage

(30) Priorität: 19.05.2010 DE 102010017029
(43) Veröffentlichungstag der Anmeldung: 23.11.2011
(73) Patentinhaber: Huf Hülsbeck & Fürst GmbH & Co. KG, 42551 Velbert (DE)
(72) Erfinder: Trischberger, Werner, 85229, Langenpettenbach (DE)
(74) Vertreter: Vogel, Andreas

(56) Entgegenhaltungen:
- DE-A1- 4 219 846
- US-B1- 7 299 669

## Beschreibung

Die Erfindung betrifft eine Vorrichtung zur Ansteuerung eines Sperrgliedes einer Lenksäule eines Kraftfahrzeuges, mit einem Schließzylinder, der ein Gehäuse und einen darin aufgenommenen, um eine Achse drehbaren Zylinderkern aufweist, der aus einer Nullstellung in weitere, zueinander winkelversetzte Stellungen, wie eine Zwischenstellung und eine Endstellung drehbar ist, einem Steuerglied, das mit dem Sperrglied mechanisch gekoppelt ist, so dass bei Drehung des Zylinderkerns um die erste Achse das Sperrglied zwischen einer Verriegelungsstellung und einer Entriegelungsstellung bringbar ist, einem Schalter, der entsprechend der Stellung des Zylinderkerns unterschiedliche Betriebszustände des Kraftfahrzeuges bestimmt, wobei in der Zwischenstellung der Fahrzeugmotor aktiv ist, nachdem vorausgehend in der Endstellung eine Zündung des Fahrzeugmotors erfolgt ist, und einer Anlasswiederholsperre, die bei aktiviertem Fahrzeugmotor auf den Zylinderkern wirkt, wodurch eine erneute Drehung des Zylinderkerns in die Endstellung verhindert wird.

Aus dem Stand der Technik ist es bekannt, Schließzylinder aus einem Zylindergehäuse und einem darin mit seinen Zuhaltungen aufgenommenen Zylinderkern zu verwenden. Der Zylinderkern steht in Wirkverbindung mit einem Schalter, insbesondere Zündschalter, und kann mittels eines eingesteckten Schlüssels aus einer sperrwirksamen Nullstellung in weitere zueinander winkelversetzte Stellungen überführt werden. Um die Drehrichtungen voneinander unterscheiden zu können, sollen nachfolgend wegen der entsprechenden, am Schalter vollzogenen Funktionen, eine von der Nullstellung weggerichtete Drehung als im "Einschaltsinn" erfolgend bezeichnet werden, während umgekehrt, eine auf die Nullstellung zugerichtete als im "Ausschaltsinn" ausgeführt gelten.

Wenn der Zylinderkern sich in der Nullstellung befindet und der Schlüssel abgezogen ist, befindet sich das Sperrglied in der Verriegelungsstellung. In allen übrigen Drehstellungen und bei in Nullstellung noch steckendem Schüssel ist das Sperrglied in der Entriegelungsstellung. Im Gegensatz zur Verriegelungsstellung, bei der eine Bewegung der Lenksäule blockiert ist, weist das Sperrglied in der Entriegelungsstellung einen definierten Abstand zur Lenksäule auf. Zur Bewegung des Sperrgliedes dient das Steuerglied, welches in Wirkverbindung zum Sperrglied steht.

In der DE 42 19 846 C2 ist ein Lenkschloss mit einer Anlasswiederholsperre nach dem Oberbegriff des Anspruch 1 offenbart. Die Anlasswiederholsperre bewirkt, dass der Schlüssel nach einem vorangegangenen Startversuch aus der Endstellung über die benachbarte Zwischenstellung hinweg erst wieder in die Nullstellung zurückgedreht werden muss, bevor mit einem neuen Startvorgang begonnen werden kann. Die Anlasswiederholsperre ist als einstückige, winkelförmige Blattfeder ausgeführt, die aus zwei Schenkeln besteht. Der eine Winkelschenkel wird beidendig an ortsfesten Lagerstellen festgehalten, wobei die eine Lagerstelle im Scheitelbereich zwischen den beiden Schenkeln angreift. Die Blattfeder weist hierbei zwei Enden auf. Das erste Ende der Blattfeder ist an einer Lagerstelle befestigt. Das zweite Ende der Blattfeder lässt sich aufgrund der Biegeelastizität entsprechend auslenken, wobei in der Zwischenstellung des Zylinderkerns die Blattfeder mit ihrem zweiten freien Ende derart auf den Zylinderkern wirkt, dass bei einem aktivierten Fahrzeugmotor eine erneute Drehung des Zylinderkerns in die Endstellung verhindert wird. Nachteiligerweise hat es sich gezeigt, dass die Anordnung der Blattfeder in dem Lenkschloss platzaufwendig ist.

Aufgabe der vorliegenden Erfindung ist es, eine Vorrichtung zur Ansteuerung eines Sperrgliedes zu schaffen, die die genannten Nachteile vermeidet, insbesondere eine Vorrichtung mit einer Anlasswiederholsperre geschaffen wird, die kompakt aufgebaut ist, wobei gleichzeitig nach einem vorangegangenen Startversuch eine Bewegung des Zylinderkerns aus der Zwischenstellung in die Endstellung zuverlässig verhindert wird.

Zur Lösung dieser Aufgabe wird eine Vorrichtung den Merkmalen des Anspruches 1 vorgeschlagen. In den abhängigen Ansprüchen sind bevorzugte Weiterbildungen ausgeführt.

Dazu ist erfindungsgemäß vorgesehen, dass die Anlasswiederholsperre als Federelement ausgeführt ist, das sich in Erstreckungsrichtung des Zylinderkerns erstreckt.

Der Kern der Erfindung ist, dass die Anlasswiederholsperre, insbesondere das Federelement, sich nahezu parallel zur Achse des Zylinderkerns erstreckt, wodurch ein kompakter und platzsparender Gesamtaufbau erzielbar ist. Im Einschaltsinn als auch im Ausschaltsinn führt das Federelement eine Schwenkbewegung mit einem geringen Hub aus, welches eine platzsparende Konstruktion der erfindungsgemäßen Vorrichtung begünstigt. Hierbei reicht es aus, dass das Federelement nur um wenige Winkelbeträge bewegt werden muss, um in der Zwischenstellung des Zylinderkerns eine erneute Drehung des Zylinderkerns in die Endstellung zuverlässig zu verhindern.

In einer möglichen Ausführungsform der Erfindung weist das Gehäuse eine Aufnahme auf, an der das Federelement angeordnet ist. In einer bevorzugten Ausführungsform kann das Federelement radial auf den Zylinderkern und/oder auf das Steuerglied einwirken. In Abhängigkeit von der jeweiligen Drehung des Zylinderkerns verfährt das Federelement entlang des Steuergliedes und wird durch eine entsprechende Kontur des Steuergliedes entsprechend bewegt. Vorteilhafterweise ist das Federelement an einer ersten Seite unbeweglich am Gehäuse befestigt und an einer zweiten Seite an der Aufnahme des Gehäuses derart gelagert, dass durch eine definierte Drehung des Zylinderkerns eine Abstandsänderung des freien Endes der zweiten Seite zur Achse erzielbar ist. Hierbei wird bei einer Bewegung des Zylinderkerns zwischen der Nullstellung und der Zwischenstellung das Federelement um einen Winkel ausgelenkt. Zudem ist das Federelement vorteilhafterweise um eine zweite Achse am Gehäuse im Bereich seiner ersten Seite schwenkbar gelagert. Die zweite Achse verläuft vorteilhafterweise windschief zur ersten Achse des Zylinderkerns. Gleichzeitig ist die zweite Achse beabstandet zur ersten Achse angeordnet.

In einer möglichen Ausführungsform der Erfindung kann das Federelement koaxial zur ersten Achse angeordnet sein. Vorteilhafterweise liegt das Federelement sowohl im Einschaltsinn als auch im Ausschaltsinn stets am Steuerglied an.

Um eine kompakte Bauform sicherzustellen erstreckt sich das Federelement im Wesentlichen längs zum Zylinderkern und/oder längs der ersten Achse des Sperrgliedes.

Die Anlasswiederholsperre stellt somit mit ihrem Federelement ein einfaches Bauelement in der gesamten Vorrichtung zur Ansteuerung eines Sperrgliedes einer Längssäule dar. Im Gegensatz zum bekannten Stand der Technik weist die Anlasswiederholsperre lediglich ein Element auf, d. h. in Form eines Federelementes, das ausreicht, die Gesamtfunktionsweise der erfindungsgemäßen Vorrichtung sicherzustellen. Zudem ist das Bauteil des Federelementes einfach in die Gesamtvorrichtung montierbar und stellt gleichzeitig ein kostengünstiges Bauelement dar.

Des Weiteren kann vorgesehen sein, dass das Gehäuse eine Aufnahme aufweist, an der das Federelement angeordnet ist. Hierbei wird das Federelement sicher im Gehäuse gehalten, während der Drehung des Zylinderkerns im Einschaltsinn als auch im Ausschaltsinn das Federelement kontaktierend am Steuerglied entlang gleitet und in der Zwischenstellung derart am Steuerglied angreift, dass eine Anlasswiederholung ausgeschlossen ist.

Vorteilhafterweise kann die Erfindung sich dadurch auszeichnen, dass das Federelement radial auf den Zylinderkern und/oder auf das Steuerglied wirkt. Zudem ist es denkbar, dass das Federelement an einer ersten Seite unbeweglich am Gehäuse befestigt ist und an einer zweiten Seite an der Aufnahme des Gehäuses derart gelagert ist, das durch eine definierte Drehung des Zylinderkerns eine Abstandsänderung des freien Endes der zweiten Seite zur Achse erzielbar ist. Hierbei kann das Federelement an seiner ersten Seite kraft- und/oder form- und/oder stoffschlüssig mit dem Gehäuse befestigt sein. Dieser Bereich dient als eine Art Festlager der ersten Seite des Federelementes. Die zweite Seite, die am Steuerglied kontaktierend anliegt, wird über die Drehung des Zylinderkerns im Einschaltsinn als auch im Ausschaltsinn bewegt, wodurch eine Abstandsänderung des freien Endes der zweiten Seite des Federelementes zur Achse des Zylinderkerns bewirkt wird. Bei einer Bewegung des Zylinderkerns zwischen der Nullstellung und der Zwischenstellung des Zylinderkerns wird das Federelement um einen definierten Winkel ausgelenkt. Hierbei ist es denkbar, dass in der Nullstellung das Federelement eine erste Federvorspannung aufweist und das Federelement in der Zwischenstellung keine oder eine zweite Federspannung aufweist, wobei insbesondere die zweite Federspannung geringer ist als die erste Federspannung. Somit ist es denkbar, dass bei der Bewegung des Zylinderkerns von der Endstellung in die Zwischenstellung eine Entspannung des Federelementes, insbesondere eine vollständige Entspannung des Federelementes erfolgt.

In einer weiteren die Erfindung verbessernden Maßnahme kann das Gehäuse eine Öffnung aufweisen, durch die sich das Federelement mit seiner zweiten Seite erstreckt, wobei insbesondere das Federelement einen zur ersten Achse des Zylinderkerns ausgerichteten gebogenen Verlauf aufweist, wobei insbesondere der gebogene Verlauf im Bereich der Öffnung liegt. Über den gebogenen Verlauf des Federelementes wird eine zufriedenstellende Haptik während der Drehbewegung des Zylinderkerns im Einschaltsinn als auch im Ausschaltsinn erzielt. Zudem liegt das freie Ende der zweiten Seite des Federelementes zuverlässig an der Kontur des Steuergliedes an. Darüber hinaus bewirkt der gebogene Verlauf des Federelementes, dass eine kompakte Gesamtvorrichtung erzielbar ist, da die Hubbewegung des Federelementes innerhalb der Öffnung des Gehäuses während der Drehung des Zylinderkerns im Einschaltsinn als auch im Ausschaltsinn möglichst gering gehalten werden kann.

Vorteilhafterweise stellt das Federelement eine Stahlfeder dar. Zudem verläuft das Federelement nahezu parallel zur ersten Achse des Zylinderkerns, wenn der Zylinderkern sich in der Zwischenstellung befindet. Das bedeutet, dass für die zuverlässige Funktionsweise das Federelement nicht unbedingt genau parallel zur ersten Achse des Zylinderkerns verlaufen muss. Kleinere Winkelabweichungen sind durchaus möglich. Dennoch erstreckt sich das Federelement in jeder Stellung des Zylinderkerns im Wesentlichen längs zur ersten Achse des Zylinderkerns in Richtung der außen liegenden Stirnfläche des Zylinderkerns, wo der Schlüssel in den Schlüsselkanal vom Benutzer eingeführt wird.

Eine die Erfindung verbessernde Maßnahme sieht vor, dass in der Nullstellung und/oder der Endstellung des Zylinderkerns das Federelement sich in einer Ruhelage befindet, in der Zwischenstellung und/oder Endstellung des Zylinderkerns das Federelement sich in einer Sperrlage befindet, wobei das Steuerglied mit einer Kontur ausgeführt ist, die während der Bewegung des Zylinderkerns in seine jeweilige Stellung auf das Federelement wirkt, so dass das Federelement sich in eine Richtung aus der Ruhelage in die Sperrlage bewegt, die im Wesentlichen zur ersten Achse des Zylinderkerns gerichtet ist. Das Federelement nähert sich ausgehend von seiner Ruhelage in die Sperrlage der ersten Achse des Zylinderkerns an, wodurch eine erhöhte Sicherheit zur Verhinderung einer Anlasswiederholung geschaffen wird. Insbesondere ist die Bewegungsrichtung des Federelementes radial zur ersten Achse des Zylinderkerns gerichtet.

Erfindungsgemäß ist es denkbar, dass der Zylinderkern und das Steuerglied ein gemeinsames Bauteil bilden. Hierbei ist der Zylinderkern ebenfalls mit einer entsprechenden Kontur ausgeführt, die während der Drehung des Zylinderkerns im Einschaltsinn oder im Ausschaltsinn auf das Federelement wirkt, welches wiederum zwischen seiner Ruhelage und seiner Sperrlage sich bewegt. Alternativ dazu kann der Zylinderkern mit dem Steuerglied drehfest verbunden sein.

Eine die Erfindung verbessernde Maßnahme sieht vor, dass ein Schaltring am Steuerglied beweglich angeordnet ist, insbesondere dass das Steuerglied an seinem Randbereich, der dem Federelement zugewandt ist, mit einer Ausnehmung ausgeführt ist, in der der Schaltring beweglich gelagert ist. Vorteilhafterweise weist die Ausnehmung eine Nut auf, in die der Schaltring mit einem Fußbereich hineinragt. Somit ist der Schaltring in der Ausnehmung zuverlässig beweglich gelagert.

Die Ausnehmung des Steuergliedes kann einen ersten und einen zweiten Anschlag aufweisen, wobei der Schaltring ein erstes Ende und ein zweites Ende aufweist, wobei das erste Ende des Schaltringes dem ersten Anschlag und das zweite Ende des Schaltringes dem zweiten Anschlag zugewandt ist, wobei die Ausnehmung nur teilweise durch den Schaltring ausgeführt ist. Der Schaltring ist im Wesentlichen der geometrischen Kontur der Ausnehmung ausgeführt. Entsprechend der Drehung des Zylinderkerns im Einschaltsinn oder im Ausschaltsinn dient der Schaltring unter Anderem der Führung der Bewegung des Federelementes.

In einer bevorzugten Ausführungsform der Erfindung weist das Steuerglied einen radial nach außen verlaufenden Nocken auf, der in Nullstellung und/oder in Endstellung an einem Anschlag des Gehäuses anliegt. Somit kann eine Überdrehung im Einschaltsinn und/oder im Ausschaltsinn des Zylinderkerns zuverlässig verhindert werden. Der Nocken kann beispielsweise vorsprungartig radial nach außen sich erstrecken. Alternative geometrische Ausführungsalternativen des Nockens sind selbstverständlich denkbar.

Vorzugsweise weist das Steuerglied an seinem Randbereich einen Freiraum auf, in die sich das Federelement in der Zwischenstellung des Zylinderkerns erstreckt, insbesondere der Freiraum eine Steuerkurve aufweist, die am Federelement während der Bewegung des Zylinderkerns von seiner Zwischenstellung in die Nullstellung und/oder in die Vorstellung derart angreift, dass das Federelement aus seiner Sperrlage in die Ruhelage sich verschwenkt. Hierbei kann bei einer Bewegung des Zylinderkerns aus seiner Nullstellung in Richtung Endstellung der Schaltring mit seinem zweiten Ende am zweiten Anschlag anliegen und gleichzeitig den Freiraum verdecken, wobei das erste Ende des Schaltringes zum ersten Anschlag beabstandet ist.

Vorteilhafterweise dient bei der Bewegung des Zylinderkerns aus der Endstellung in die Zwischenstellung der Vorsprung des Schaltringes als Anschlagelement für das Federelement, um den Schaltring in Richtung des ersten Anschlages des Steuergliedes zu bewegen. Während einer Bewegung aus der Endstellung in die Zwischenstellung des Zylinderkerns, gleitet das Federelement entlang des Randbereiches des Steuergliedes ab, wobei es sich immer noch in der Ruhelage befindet. Das bedeutet, dass in der Nullstellung sowie in der Endstellung des Zylinderkerns das Federelement seine Ruhelage einnimmt. Gleichzeitig rotieren das Steuerglied sowie der Zylinderkern in Richtung Zwischenstellung, wobei der Schaltring innerhalb der Ausnehmung des Steuergliedes sich mitbewegt. Ab einer gewissen Drehposition des Steuergliedes kontaktiert das Federelement den Vorsprung des Schaltringes. Während der Zylinderkern weiter in Richtung Zwischenstellung um seine erste Achse rotiert, verhindert das am Vorsprung des Schaltringes anliegende Federelement, dass der Schaltring sich mit dem Steuerglied bewegt. Hierdurch öffnet sich ein Freiraum des Steuergliedes, in den das Federelement sich bewegt und dort seine Sperrlage einnimmt, wenn die Zwischenstellung des Zylinderkerns erreicht ist.

Vorteilhafterweise weist der Freiraum des Steuergliedes, in dem das Federelement in der Zwischenstellung des Zylinderkerns sich befindet, eine Steuerkurve auf, die am Federelement während der Bewegung des Zylinderkerns von seiner Zwischenstellung in die Nullstellung derart angreift, dass das Federelement aus seiner Sperrlage in die Ruhelage sich verschwenkt. Hierbei kann vorgesehen sein, dass bei einer Bewegung des Zylinderkerns aus seiner Nullstellung in Richtung Endstellung der Schaltring mit seinem zweiten Ende am zweiten Anschlag anliegt und gleichzeitig den Freiraum verdeckt, wobei das erste Ende des Schaltringes zum ersten Anschlag beabstandet ist. Vorteilhafterweise ist das Steuerglied mit der Steuerkurve ausgeführt.

Zudem ist es denkbar, dass der Freiraum mit einer Blockierfläche ausgeführt ist, die dafür sorgt, dass eine erneute Bewegung des Zylinderkerns in Richtung Endstellung blockiert ist, wenn sich das Federelement in der Zwischenstellung befindet. Versucht der Benutzer in der Zwischenstellung des Zylinderkerns eine erneute Bewegung des Zylinderkerns in Richtung Endstellung, greift die Blockierfläche des Steuergliedes unmittelbar am Federelement an, das sich in der Sperrlage befindet, wodurch eine Rotation des Zylinderkerns in Richtung Endstellung gesperrt wird.

In einer möglichen Ausführungsform der Erfindung kann der Zylinderkern einen Schlüsselkanal aufweisen, in den ein Schlüssel einsetzbar ist, wobei der Zylinderkern eine innenliegende Stirnfläche aufweist, die einer außenliegenden Stirnfläche, an der der Schlüssel einführbar ist, des Zylinderkerns abgewandt ist, wobei die innenliegende Stirnfläche in Wirkverbindung mit dem Schalter ist. Im Gegensatz zur DE 42 19 864 C2 befindet sich die Anlasswiederholsperre vorteilhafterweise im Bereich der innenliegenden Stirnfläche des Steuergliedes. Hierdurch können etwaige Manipulationsversuche an der Anlasswiederholsperre von Außen nahezu ausgeschlossen werden.

Die erfindungsgemäße Vorrichtung kann als elektrische Lenkungsverriegelung für Fahrzeuge zum Einsatz kommen, wobei die Vorrichtung zudem problemlos mit insbesondere sogenannten "Keyless-Entry-Systemen" kombinierbar ist. Die erfindungsgemäße Vorrichtung kann von außen beispielsweise per Funksignal oder nach einem stattgefundenen Datenaustausch aktiviert werden. Dabei ermöglicht die Erfindung selbstverständlich eine Rückmeldung dahingehend, ob die betreffende Vorrichtung zuverlässig das funktionswesentliche Bauteil, insbesondere die Lenksäule oder den Zylinderkern zur Anlasswiederholung blockiert oder nicht. Dies kann z. B. durch eine optische oder akustische Meldevorrichtung dargestellt werden.

Vorteilhafterweise wird die Vorrichtung zur Ansteuerung des Sperrgliedes durch eine Steuerelektronik überwacht, die fahrzeugseitig angeordnet sein kann. Aus sicherheitstechnischen Gründen ist es vorteilhaft, wenn neben der Positionsbestimmung des Sperrgliedes auch der Drehweg des Steuergliedes erfasst wird. Dieses kann beispielsweise durch Sensoren, insbesondere Magnetfeldsensoren, erfolgen, die das magnetische Feld eines auf dem Sperrglied oder Steuerglied angebrachten Permanentmagneten erfassen. Dadurch kann eine elektronische Steuerung die Funktionsfähigkeit der Gesamtvorrichtung sowie eine etwaige Manipulation erkennen.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: die stirnseitige Draufsicht auf den Schließzylinder mit verschiedenen zueinander winkelversetzten Stellungen eines zugehörigen Zylinderkerns,
- Fig. 2: eine Seitenansicht auf die erfindungsgemäße Vorrichtung eines Lenkschlosses in strichpunktiert angedeuteter Montagelage zu einer Lenksäule und ihrem Gehäuse,
- Fig. 3: eine Querschnittsansicht gemäß der Schnittlinie III-III aus Fig. 2,
- Fig.4: eine Draufsicht auf die innenliegende Stirnfläche des Zylinderkerns, wobei der Zylinderkern sich in einer Nullstellung befindet,
- Fig. 5: eine Ansicht gemäß Fig. 4, wobei der Zylinderkern sich in einer winkelversetzten Stellung I befindet,
- Fig. 6: eine Darstellung gemäß Fig. 4, wobei der Zylinderkern sich in der Stellung III befindet,
- Fig. 7: eine Darstellung gemäß Fig. 4, wobei sich der Zylinderkern in Richtung einer Zwischenstellung bewegt,
- Fig. 8: eine Darstellung gemäß Fig. 4, wobei der Zylinderkern sich in der Zwischenstellung II befindet,
- Fig. 9: eine Darstellung gemäß Fig. 4, wobei der Zylinderkern aus der Zwischenstellung in Richtung Nullstellung sich bewegt,
- Fig. 10: eine Darstellung gemäß Fig. 4, wobei der Zylinderkern sich in Richtung Nullstellung bewegt,
- Fig. 11: eine Darstellung gemäß Fig. 4, wobei der Zylinderkern seine Nullstellung erreicht hat,
- Fig. 12: eine weitere Ansicht auf die erfindungsgemäße Vorrichtung und
- Fig. 13: eine Schnittdarstellung gemäß der Schnittlinie A-A aus Fig. 5.

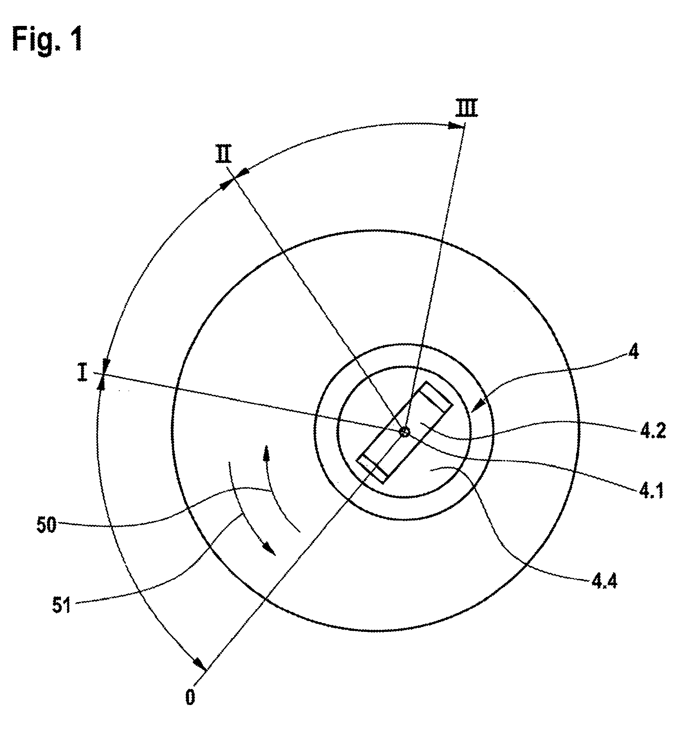

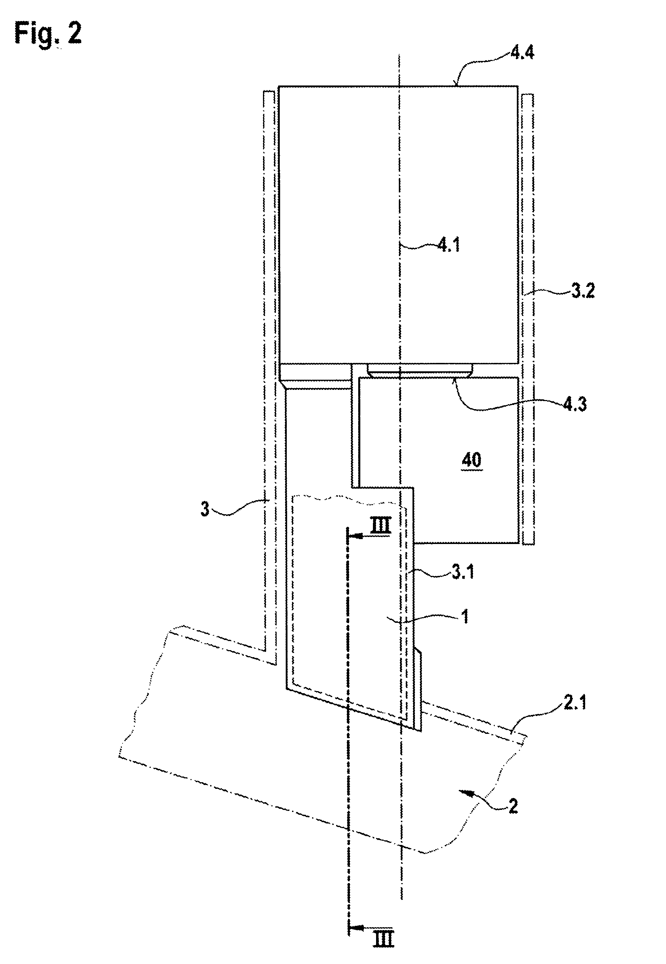

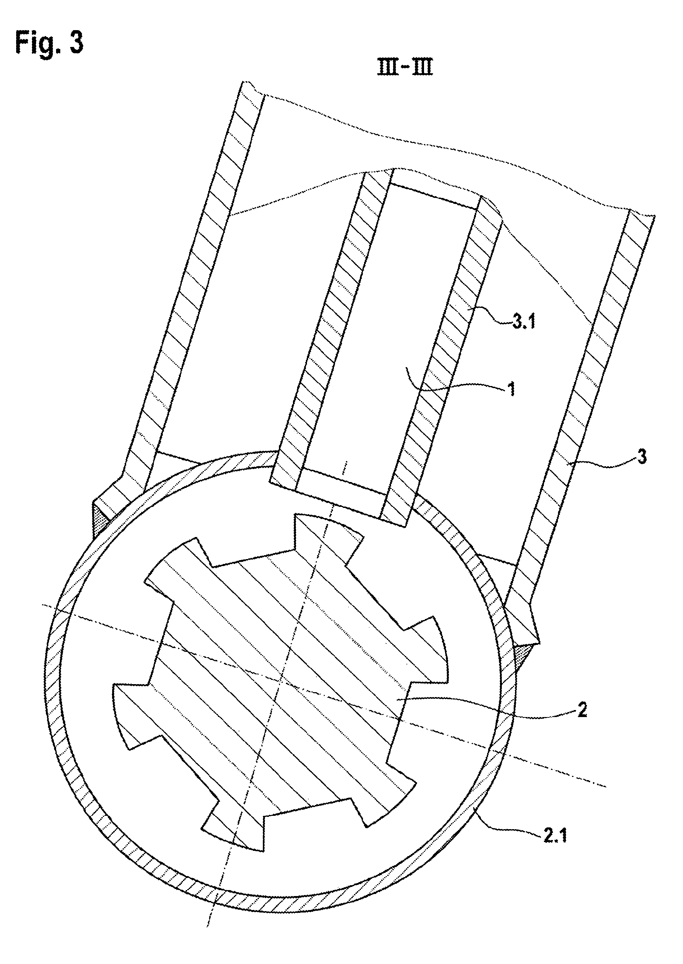

Die Figuren 1 bis 13 veranschaulichen ein Ausführungsbeispiel einer erfindungsgemäßen Vorrichtung zur Ansteuerung eines Sperrgliedes 1 einer Lenksäule 2 eines Kraftfahrzeuges. Hierbei ist die erfindungsgemäße Vorrichtung ein Lenkschloss mit einem Schließzylinder, der ein Gehäuse 3 aufweist, welches in Fig. 2 und Fig. 3 angedeutet ist. Hierbei ist das Gehäuse 3 mehrteilig ausgeführt. In einem Gehäuseoberteil 3.2 befindet sich ein Zylinderkern 4, der drehbar um eine erste Achse 4.1 gelagert ist. Hierbei ist der Zylinderkern 4 gemäß Fig. 1 aus einer Nullstellung 0 in weitere zueinander winkelversetzte Stellungen I, II, III bewegbar. Der Zylinderkern 4 besitzt einen Schlüsselkanal 4.2 zur Aufnahme eines nicht expliziten dargestellten Schlüssels, mit welchem der Zylinderkern 4 aus der in Fig. 1 bezeichneten Nullstellung 0 in die drei bereits erwähnten Stellungen I, II und III überführbar ist. Deren Winkelversatz ist aus den in Fig. 1 erkennbaren Winkelbeträgen α, β und γ entnehmbar.

Bei der vorliegenden Anwendung auf ein Kraftfahrzeug sind in der Stellung I des Zylinderkerns 4 über einen Schalter 40, der in Fig. 2 schematisch dargestellt ist, diverse Verbraucher am Kraftfahrzeug, beispielsweise ein Radio mit einer entsprechenden Spannung aktivierbar. Beim Weiterdrehen im Einschaltsinn 50 in die Zwischenstellung 11 befindet sich das Fahrzeug in seiner Funktion "Fahrt", wo der Motor läuft, wenn vorausgehend in der äußersten Endstellung III über den Schalter 40 die "Zündung" des Motors bereits erfolgt ist. Falls der Benutzer eine Deaktivierung des Motors wünscht, wird aus der Zwischenstellung II der Zylinderkern 4 in Richtung Nullstellung 0 bewegt, wobei der Zylinderkern 4 sich im Ausschaltsinn 51 bewegt. In den Stellungen I, II und III ist ein Herausziehen des eingesteckten Schlüssels nicht möglich, da die erfindungsgemäße Vorrichtung mit einer Schlüsselabzugssicherung versehen ist, die jedoch explizit nicht dargestellt ist.

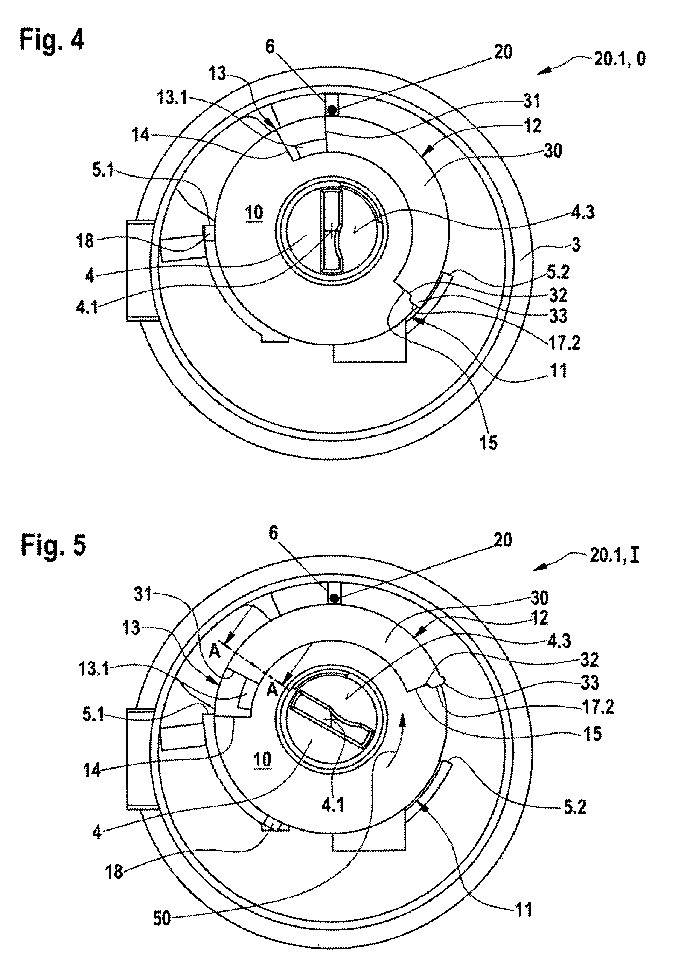

Wie in Fig. 4 dargestellt ist, ist ein Steuerglied 10 vorgesehen, das mit dem Sperrglied 1 aus der Fig. 2 und Fig. 3 mechanisch gekoppelt ist. Über eine entsprechende Drehung des Zylinderkerns 4 erfolgt eine Bewegung des Steuergliedes 10, wobei das Steuerglied 10 derart mit dem Sperrglied 1 in Wirkverbindung steht, dass das Sperrglied 1 zwischen einer Verriegelungsstellung und einer Entriegelungsstellung bringbar ist. In Fig. 3 ist exemplarisch eine Entriegelungsstellung gezeigt, in der das Sperrglied 1 losgelöst und beabstandet von der Lenksäule 2 ist. In diesem Fall ist eine entsprechende Bewegung der Lenksäule 2 möglich. In der nicht explizit dargestellten Verriegelungsstellung greift hingegen das Sperrglied 1 derart in die Profilierung der Lenksäule 2 ein, dass eine Bewegung der Lenksäule 2 blockiert ist. Wie in Fig. 3 gezeigt ist, ist die Lenksäule 2 durch ein zylinderförmiges Lenksäulengehäuse 2.1 von außen abgeschlossen. Das Sperrglied 1 ist ebenfalls in einem separaten Gehäuseunterteil 3.1 linear beweglich geführt, welches in Fig. 2 und Fig. 3 gezeigt ist.

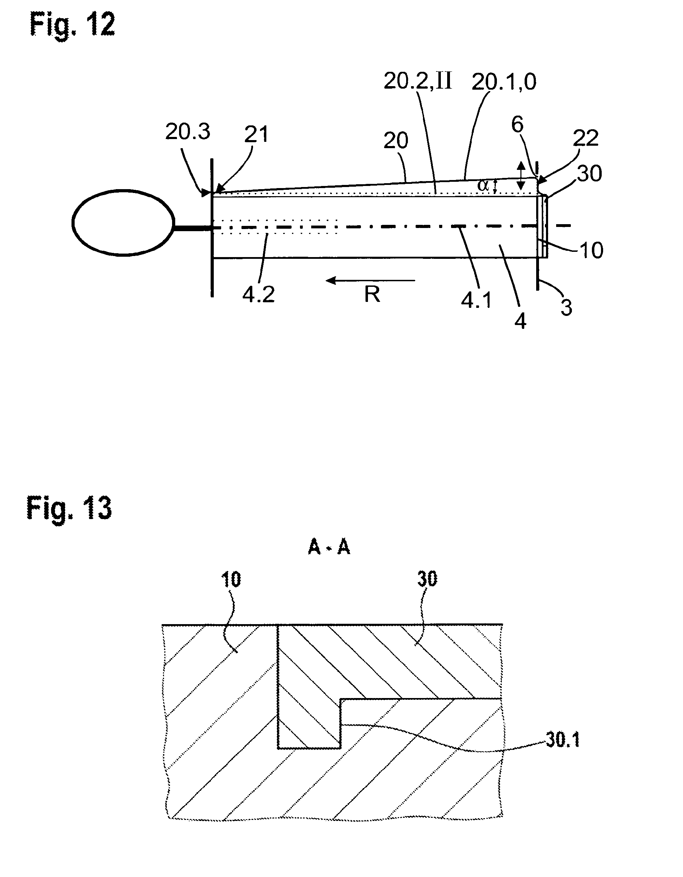

Das in den Ausführungsbeispielen gezeigte Lenkschloss weist eine Anlasswiederholsperre 20 auf. Hierbei ist die Anlasswiederholsperre als Federelement 20 ausgeführt, das sich in Erstreckungsrichtung R des Zylinderkerns 10 erstreckt, welches in Figur 12 gezeigt ist. Das bedeutet nicht, dass das Federelement 20 an diversen Stellungen 0, I, II, III des Zylinders 4 parallel zur Achse 4.1 des Zylinderkerns 4 ausgerichtet ist. Das Federelement 20 ist am Gehäuse 3 zuverlässig befestigt. Das Federelement 20 ist an seiner ersten Seite 21 fest und unbeweglich am Gehäuse 3 angeordnet. Dieser Bereich der ersten Seite 21 stellt eine Art Festlager für das Federelement 20 dar. Die zweite Seite 22 des Federelementes 20 erstreckt sich durch eine Öffnung 6 des Gehäuses 3, wobei die zweite Seite 22 des Federelementes 20 die Kontur des Steuergliedes 10 kontaktiert. Ein Schlüssel ist in dem Schlüsselkanal 4.2 des Zylinderkerns 4 eingeführt (siehe Figur 12). Das Federelement 20 verläuft im Wesentlichen längs zur Erstreckung des Zylinderkerns 4, welches um eine erste Achse 4.1 drehbar ist. Bei der vorliegenden erfindungsgemäßen Vorrichtung kommt es darauf an, eine Drehung im Einschaltsinn 50 aus der Zwischenstellung II erneut in die Endstellung III dann zu verhindern, wenn vorausgehend der Zylinderkern 4 bereits zum Zwecke des Anlassens der Maschine des Kraftfahrzeuges in die Endstellung III gebracht worden ist und der Zylinderkern 4 aufgrund einer Wirkung einer Federkraft, die für eine selbstständige Rückstellung des Zylinderkerns 4 aus der Endstellung III im Ausschaltsinn 51 in die Zwischenstellung II sorgt, bereits in die Zwischenstellung II zurückgeführt worden ist. Eine derartige Zielsetzung wird als "Anlasswiederholsperre" bezeichnet. Dadurch sollen unter anderem Beschädigungen am Anlasser und der damit zusammenwirkenden Bauteile des Kraftfahrzeuges wirksam verhindert werden.

Das Ausführungsbeispiel zeichnet sich dadurch aus, dass die Anlasswiederholsperre 20 im Wesentlichen längs zur ersten Achse 4.1 innerhalb des Lenkschlosses angeordnet ist, wodurch eine kompakte und platzsparende Gesamtvorrichtung erzielt wird und gleichzeitig eine zuverlässige Funktionsweise sichergestellt wird. Hierbei ist das Federelement 20 als Stahlfeder ausgeführt.

Gemäß Fig. 4 befindet sich der Zylinderkern 4 in seiner Nullstellung 0. Das Federelement 20 befindet sich hierbei in seiner Ruhelage 20.1. Wie deutlich zu erkennen ist, weist das Steuerglied 10, das ebenfalls um die erste Drehachse 4.1 gelagert ist, eine Kontur 11 auf, die während der Bewegung des Zylinderkerns 4 in seine jeweiligen Stellungen I, II und III auf das Federelement 20 wirkt, so dass das Federelement 20 sich aus der Ruhelage 20.1 in eine Sperrlage 20.2 bewegt, worauf noch im Folgenden eingegangen wird.

Der Zylinderkern 4 sowie das Steuerglied 10 sind zwei unterschiedliche Bauteile, wobei der Zylinderkern 4 und das Steuerglied 10 drehfest miteinander verbunden sind. Selbstverständlich ist es hierbei denkbar, den Zylinderkern 4 und das Steuerglied 10 als gemeinsames Bauteil auszubilden, welches jedoch explizit nicht dargestellt ist.

Im Ausführungsbeispiel gemäß Fig. 4 bis Fig. 13 ist die Anlasswiederholsperre 20 als ein Bauteil ausgeführt. Hierbei ist die Anlasswiederholsperre 20 als Federelement 20 ausgeführt.

Wie in Fig. 4 zu erkennen ist, ist ein Schaltring 30 am Steuerglied 10 beweglich angeordnet. Hierbei ist das Steuerglied 10 an seinem Randbereich 12 mit einer Ausnehmung 13 ausgeführt. In dieser Ausnehmung 13 ist der Schaltring 30 beweglich gelagert. Wie gut aus Fig. 4 zu erkennen ist, füllt der Schaltring 30 nur teilweise die Ausnehmung 13 aus. Gemäß Fig. 5 und Fig. 13 weist die Ausnehmung 13 eine Nut 13.1 auf, in die der Schaltring 30 mit einem Fußbereich 30.1 hineinragt und dort beweglich gelagert ist. Des Weiteren ist der Schaltring 30 mit einem radial nach außen sich erstreckenden Vorsprung 33 ausgeführt. Der Zylinderkern 4 ist gemäß des aufgeführten Ausführungsbeispieles mit einer nicht explizit dargestellten Druckfeder federbelastet, so dass während der Bewegung des Zylinderkerns 4 zwischen der Nullstellung 0 und den jeweiligen Stellungen I, II, III ein Moment auf den Zylinderkern 4 angreift, das in Richtung der Nullstellung 0 wirkt.

Die Ausnehmung 13 des Steuergliedes 10 weist einen ersten 14 und einen zweiten Anschlag 15 auf. Der Schaltring 30 weist ein erstes Ende 31 sowie ein zweites Ende 32 auf, wobei das erste Ende 31 des Schaltringes 30 dem ersten Anschlag 14 zugewandt ist. Gemäß Fig. 4 besteht ein Abstand zwischen dem ersten Ende 31 des Schaltringes 30 und dem ersten Anschlag 14 der Ausnehmung 13. Das zweite Ende 32 des Schaltringes 30 kontaktiert den zweiten Anschlag 15 der Ausnehmung 13.

Das Steuerglied 10 weist einen radial nach außen verlaufenden Nocken 18 auf, der einstückig mit dem Steuerglied 10 verbunden ist. Der Nocken 18 kontaktiert in der in Fig. 4 dargestellten Position einen ersten Anschlag 5.1 des Gehäuses 3.

Bei eingestecktem Schlüssel lässt sich nun der Zylinderkern 4 im Einschaltsinn 50 aus der Nullstellung 0 gemäß Fig. 4 in seine in Fig. 5 gezeigte Vorstellung I überführen, deren Drehwinkel α bereits im Zusammenhang mit Fig. 1 beschrieben worden ist. Während der Zylinderkern 4 im Einschaltsinn 50 gedreht wird, bewegt sich gleichzeitig das Steuerglied 10 mit sowie der koaxial zum Zylinderkern 4 vorgesehenen Schaltring 30. Während der Bewegung des Zylinderkerns 4 in die Vorstellung I kontaktiert gleichzeitig das freie Ende 22 des Federelementes 20 den Schaltring 30 an seinem Randbereich, wobei das Federelement 20 gleichzeitig das Steuerglied 10 an seinem Randbereich unterhalb des Schaltringes 30 kontaktiert.

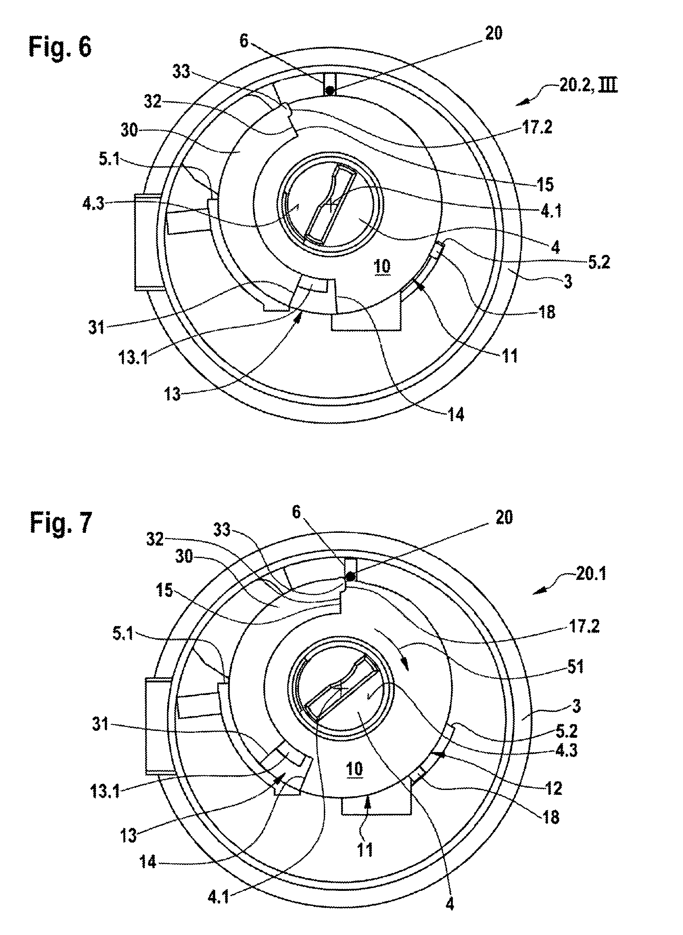

Erfolgt im Einschaltsinn 50 eine weitere Drehung des Zylinderkerns 4 um seine Achse 4.1 in Richtung Endstellung III, überfährt das freie Ende des Federelementes 20 den Vorsprung 33 des Schaltringes 30, wobei das Federelement 20 um seine Achse 20.3 um geringe Winkelbeträge nach oben verschwenkt wird, welches in Fig. 12 gezeigt ist. Nachdem das freie Ende des Federelementes 20 über den Vorsprung 33 gelangt ist, kontaktiert das freie Ende des Federelementes 20 wieder die Kontur 11 des Steuergliedes 10, wobei in der Fig. 6 dargestellten Endstellung III des Zylinderkerns 4 das Federelement 20 sich immer noch in der Ruhelage 20.1 befindet. Sowohl in der Nullstellung 0 und in der Endstellung III weist das Federelement 20 eine erste Federvorspannung auf und drückt mit der zweiten Seite 22 mit einer entsprechenden Kraft auf den Randbereich des Steuergliedes 10. In dieser Endstellung III erfolgt die Zündung des Motors. Der außenliegende Nocken 18 des Steuergliedes 10 befindet sich hierbei an einem Anschlag 5.2 des Gehäuses 3, so dass wirkungsvoll ein Weiterdrehen im Einschaltsinn 50 des Zylinderkerns 4 verhindert wird.

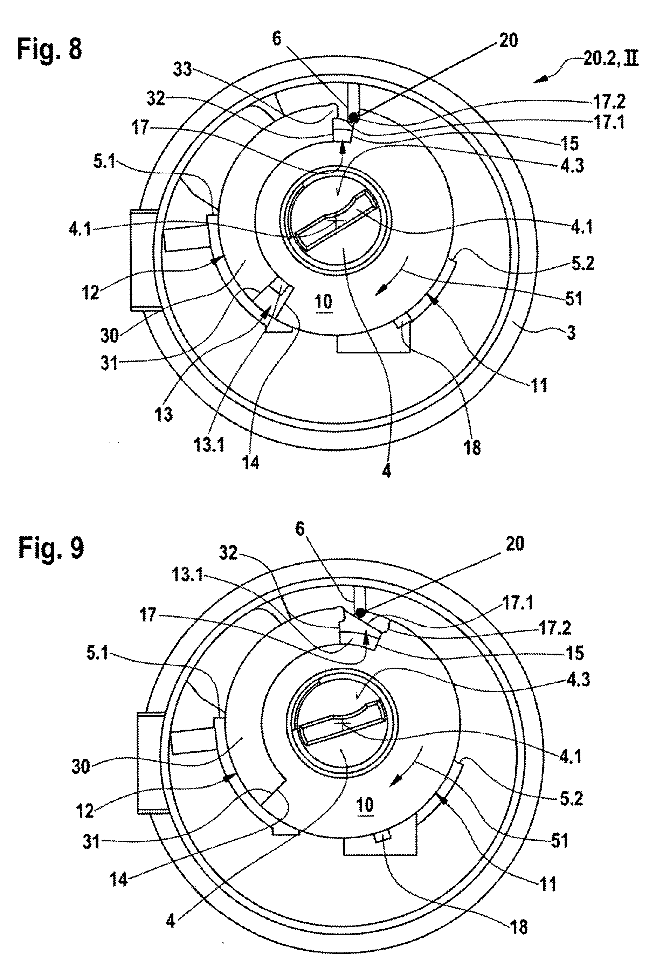

Während der Bewegung des Zylinderkerns 4 aus seiner Nullstellung 0 aus Fig. 4 in die Endstellung III in Fig. 6 liegt das zweite Ende 32 des Schaltringes 30 stets am zweiten Anschlag 15 des Steuergliedes 10 an, wobei gleichzeitig das erste Ende 31 des Schaltringes 30 beabstandet zum ersten Anschlag 14 des Steuergliedes 10 bleibt. Der Zylinderkern 4 wird nach Loslassen des Schlüssels bereits von selbst, aufgrund der auf ihn wirkenden eingangs beschriebenen Federkraft im Ausschaltsinn 51 von Fig. 6 zurückbewegt. Die Zurückbewegung des Zylinderkerns 4 wird in Fig. 8 erreicht. Während der Bewegung des Zylinderkerns 4 aus Figur 6 bis zur Zwischenstellung II in Fig. 8, gleitet das Federelement 20 entlang der äußeren Kontur des Steuergliedes 10 entlang, bis die zweite Seite 22 des Federelementes 20 den Vorsprung 33 des Schaltringes 30 kontaktiert, welches in Fig. 7 gezeigt ist. Gemäß dieser Stellung des Zylinderkerns 4 befindet sich das Federelement 20 immer noch in seiner Ruhelage 20.1. Während sich das Steuerglied 10 mit dem Zylinderkern 4 weiter in Richtung Zwischenstellung II in Ausschaltsinn 51 bewegt, schlägt der Vorsprung 33 gegen das Federelement 20 an, wodurch der Schaltring 30 in der Position gemäß Fig. 7 verbleibt. Dadurch, dass sich das Steuerglied 10 weiter im Ausschaltsinn 51 bewegt, nähert sich der erste Anschlag 14 des Steuergliedes 10 dem ersten Ende 31 des Schaltringes 30 an. Gleichzeitig entfernt sich der zweite Anschlag 15 des Steuergliedes 10 dem zweiten Ende 32 des Schaltringes 30. Wie in Fig. 8 verdeutlicht ist, verfährt das Federelement 20 in die entstehende Lücke, die zwischen dem zweiten Anschlag 15 und dem zweiten Ende 32 des Schaltringes 30 entsteht. Im Bereich dieser genannten Lücke ist das Steuerglied 10 an seinem Randbereich 12 mit einem entsprechenden Freiraum 17 ausgeführt, in der das Federelement 20 - wie bereits beschrieben - in der Zwischenstellung II gemäß Fig. 8 aufgenommen ist. Hierbei weist der Freiraum 17 eine Steuerkurve 17.1 auf, die als Steuerflanke ausgeführt ist. Die Steuerkurve 17.1 ist im Bauteil des Steuergliedes 10 integriert.

Ausgehend von der in Fig. 8 dargestellten Zwischenstellung II ist eine erneute Drehung des Zylinderkerns 4 im Einschaltsinn 50 ausgeschlossen. Der Freiraum 17 ist mit einer Blockierfläche 17.2 ausgeführt, an der die zweite Seite 22 des Federelementes 20 in der Zwischenstellung II des Zylinderkerns 4 derart anliegt und/oder positioniert ist, dass eine erneute Bewegung des Zylinderkerns 4 zur Errichtung der Endstellung III im Einschaltsinn 50 blockiert ist.

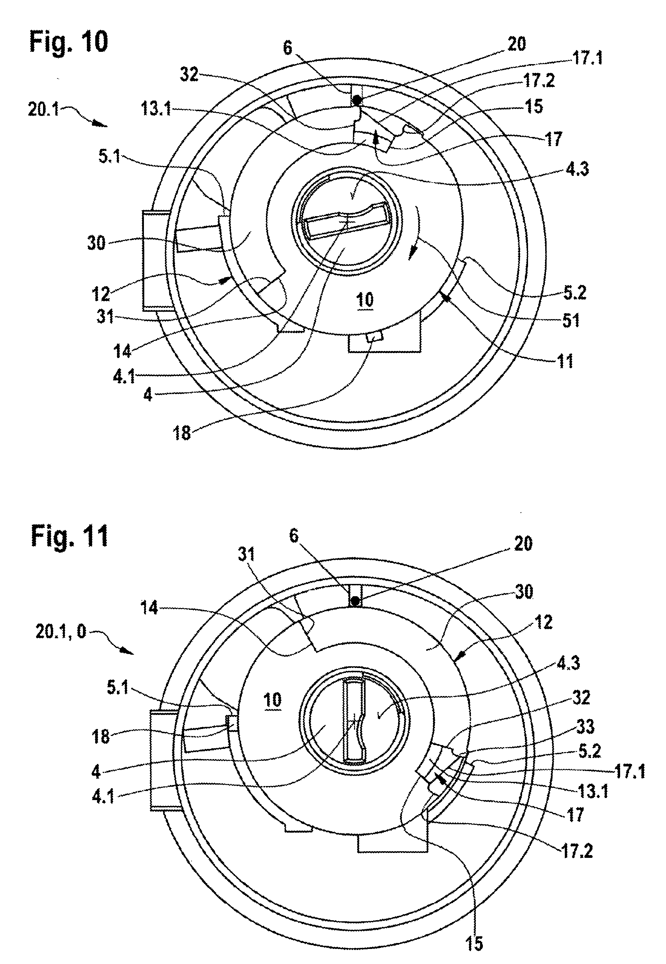

Erfolgt durch den Benutzer eine Drehung des Zylinderkerns 4 ausgehend von Fig. 8 im Ausschaltsinn 51, greift die Steuerkurve 17.1 derart am Federelement 20 an, dass dieses während der Bewegung des Zylinderkerns 4 in Richtung Nullstellung 0 aus seiner Sperrlage 20.2 in die Ruhelage 20.1 um seine Achse 20.3 sich verschwenkt. Das bedeutet, dass gemäß Figur 12 die zweite Seite 22 des Federelementes 20 sich radial zur Achse 4.1 nach oben bewegt und somit der Abstand der zweiten Seite 22 des Federelementes 20 zur Achse 4.1 sich vergrößert. Nachdem die Steuerkurve 17.1 das Federelement 20 aus der Sperrlage 20.2 in die Ruhelage 20.1 bewegt hat und sich das Steuerglied 10 weiter im Ausschaltsinn 50 bewegt, hält das freie Ende des Federelementes 20 den Schaltring 30 an seinem Vorsprung 33 fest, wodurch sich der Abstand zwischen dem zweiten Ende 32 des Schaltringes 30 und dem zweiten Anschlag 15 des Steuergliedes 10 vergrößert. In Fig. 9 kommt es schließlich zu einem Anschlag zwischen dem ersten Ende 31 des Schaltringes 30 und dem ersten Anschlag 14 des Steuergliedes 10. Ab diesem Drehwinkel des Zylinderkerns 4 nimmt das Steuerglied 10 den Schaltring 30 im Ausschaltsinn 51 mit, wobei gleichzeitig das Federelement 20 über den Vorsprung 33 fährt und kurzfristig nach oben gedrückt wird bis das Federelement 20 links vom Vorsprung 33 des Schaltringes 30 positioniert ist und seine Ruhelage 20.1 einnimmt. Die Steuerkurve 17.1 ist im vorliegenden Ausführungsbeispiel schräg ausgeführt, um zuverlässig eine entsprechende Führung des Federelementes 20 in seine jeweilige Lage 20.1, 20.2 zu gewährleisten. In Fig. 11 ist schließlich die Nullstellung 0 des Zylinderkerns 4 erreicht, wobei das Federelement 20 mit seinem freien Ende den Schaltring 30 sowie den Randbereich des Steuergliedes 10 kontaktiert.

In der Sperrlage 20.2 des Federelementes 20 kann das Federelement 20 nahezu parallel zur ersten Achse 4.1 ausgerichtet sein, welches in Fig. 12 schematisch dargestellt ist. Hierbei ist es denkbar, dass in der Ruhelage 20.1 das Federelement 20 eine erste Federvorspannung aufweist und somit mit einer definierten Kraft auf das Steuerglied 10 wirkt. In der Sperrlage 20.2 ist es denkbar, dass das Federelement 20 eine zweite Federvorspannung aufweist, wobei die zweite Federvorspannung geringer ist als die erste Federvorspannung. Alternativ ist es denkbar, dass in der Sperrlage 20.2 das Federelement 20 eine sehr geringe Federvorspannung oder keine Federvorspannung aufweist.

Gemäß einer weiteren Ausführungsform, die nicht explizit dargestellt ist, kann das Federelement 20 in der Endstellung III des Zylinderkerns 4 in einen einseitig offenen Freiraum des Steuergliedes 10 hineinragen. Das bedeutet, dass in der Endstellung III des Zylinderkerns 4 das Federelement 20 in einer von der Ruhelage 20.1 abweichenden Lage liegen kann, wobei das freie Ende 22 des Federelementes 20 einen geringeren Abstand zur Achse 4.1 aufweist als es in der Ruhelage 20.1 aufweist.

Wie in Fig. 12 schematisch gezeigt ist, weist das Federelement 20 einen zur ersten Achse 4.1 des Zylinderkerns 4 ausgerichteten gebogenen Verlauf auf. Dieser gebogene Verlauf liegt im Bereich der Öffnung 6 des Gehäuses 3. Der Vorteil dieser geometrischen Form des Federelementes 20 ist, dass die zweite Seite 22 des Federelementes 20 besonders zuverlässig in ihren beiden Lagen 20.1 und 20.2 am Steuerglied 10 und/oder am Schaltring 30 anliegt.

Gemäß dem gezeigten Ausführungsbeispiel befindet sich die Anlasswiederholsperre 20 im Bereich der innenliegenden Stirnfläche 4.3 des Steuergliedes 10, wodurch wirkungsvoll etwaige Manipulationen am Außenbereich des Zylinderkerns eine Funktionsstörung der Anlasswiederholsperre 20 nahezu ausschließen.

Bedeutsam ist, dass die Anlasswiederholsperre 20 ein einziges Bauteil ist, das sich in der Ruhelage 20.1 und in der Sperrlage 20.2 im Wesentlichen längs zur Achse 4.1 des Zylinderkerns 4 erstreckt, wodurch eine sehr kompakte Konstruktion der erfindungsgemäßen Vorrichtung sich erzielen lässt. Gleichzeitig sind nur sehr geringe Hubwege beim Federelement 20 notwendig, um wirkungsvoll die bereits geschilderten Stellungen 0, I, II und III des Zylinderkerns 4 ermöglichen zu können.

### Bezugszeichenliste

- 0: Nullstellung
- I: Vorstellung
- II: Zwischenstellung
- III: Endstellung
- 1: Sperrglied
- 2: Lenksäule
- 3: Gehäuse
- 3.1: Gehäuseunterteil
- 3.2: Gehäuseoberteil
- 4: Zylinderkern
- 4.1: erste Achse
- 4.2: Schlüsselkanal
- 4.3: innenliegende Stirnfläche
- 4.4: außenliegende Stirnfläche
- 5.1: Anschlag
- 5.2: Anschlag
- 6: Öffnung (Gehäuse)

- 10: Steuerglied
- 10.1: Steuerelement
- 11: Kontur
- 12: Randbereich des Steuergliedes
- 13: Ausnehmung
- 13.1: Nut
- 14: erster Anschlag
- 15: zweiter Anschlag
- 17: Einbuchtung, Freiraum
- 17.1: Steuerkurve
- 17.2: Blockierfläche
- 18: Nocken
- 20: Anlasswiederholsperre, Federelement
- 20.1: Ruhelage
- 20.2: Sperrlage
- 20.3: zweite Achse
- 21: erste Seite des Federelementes 20
- 22: zweite Seite des Federelementes 20

- 30: Schaltring
- 30.1: Fußbereich
- 31: erstes Ende des Schaltringes
- 32: zweites Ende des Schaltringes
- 33: Vorsprung

- 40: Schalter

- 50: Einschaltsinn
- 51: Ausschaltsinn

## Patentansprüche

1. Vorrichtung zur Ansteuerung eines Sperrgliedes (1) einer Lenksäule (2) eines Kraftfahrzeuges, mit
einem Schließzylinder, der ein Gehäuse (3) und einen darin aufgenommenen, um eine Achse (4.1) drehbaren Zylinderkern (4) aufweist, der aus einer Nullstellung (0) in weitere, zueinander winkelversetzte Stellungen (I,II,III), wie eine Zwischenstellung (II) und eine Endstellung (III) drehbar ist,
einem Steuerglied (10), das mit dem Sperrglied (1) mechanisch gekoppelt ist, so dass bei Drehung des Zylinderkerns (4) um die erste Achse (4.1) das Sperrglied (1) zwischen einer Verriegelungsstellung und einer Entriegelungsstellung bringbar ist,
einem Schalter (40), der entsprechend der Stellung des Zylinderkerns (4) unterschiedliche Betriebszustände des Kraftfahrzeuges bestimmt, wobei in der Zwischenstellung (II) der Fahrzeugmotor aktiv ist, nachdem vorausgehend in der Endstellung (III) eine Zündung des Fahrzeugmotors erfolgt ist, und
einer Anlasswiederholsperre (20), die bei aktiviertem Fahrzeugmotor auf den Zylinderkern (4) wirkt, wodurch eine erneute Drehung des Zylinderkerns (4) in die Endstellung (III) verhindert wird,
**dadurch gekennzeichnet,**
**dass** die Anlasswiederholsperre (20) als Federelement (20) ausgeführt ist, das sich in Erstreckungsrichtung (R) des Zylinderkerns (4) erstreckt.

2. Vorrichtung nach Anspruch 1,
**dadurch gekennzeichnet,**
**dass** das Gehäuse (3) eine Aufnahme (6) aufweist, an der das Federelement (20) angeordnet ist.

3. Vorrichtung nach Anspruch 1 oder 2,
**dadurch gekennzeichnet,**
**dass** das Federelement (20) radial auf den Zylinderkern (4) und/oder auf das Steuerglied (10) wirkt, und/oder dass das Federelement (20) an einer ersten Seite (21) unbeweglich am Gehäuse (3) befestigt ist und an einer zweiten Seite (22) an der Aufnahme (6) des Gehäuses (3) derart gelagert ist, dass durch eine definierte Drehung des Zylinderkerns (4) eine Abstandsänderung des freien Endes der zweiten Seite (22) zur Achse (4.1) erzielbar ist.

4. Vorrichtung nach einem der vorhergehenden Ansprüche,
**dadurch gekennzeichnet,**
**dass** bei einer Bewegung des Zylinderkerns (4) zwischen der Nullstellung (0) und der Zwischenstellung (II) das Federelement (20) um einen Winkel (α) ausgelenkt wird, insbesondere das Federelement (20) um eine zweite Achse (20.3) schwenkbar gelagert ist, die windschief zur ersten Achse (4.1) verläuft.

5. Vorrichtung nach einem der vorhergehenden Ansprüche,
**dadurch gekennzeichnet,**
**dass** das Federelement (20) eine Stahlfeder ist.

6. Vorrichtung nach einem der vorhergehenden Ansprüche,
**dadurch gekennzeichnet,**
**dass** in der Nullstellung (0) das Federelement (20) eine erste Federvorspannung aufweist und das Federelement (20) in der Zwischenstellung (II) keine oder eine zweite Federspannung aufweist, wobei insbesondere die zweite Federspannung geringer ist als die erste Federspannung.

7. Vorrichtung nach einem der vorhergehenden Ansprüche,
**dadurch gekennzeichnet,**
**dass** das Gehäuse (3) eine Öffnung (6) aufweist, durch die das Federelement (20) mit seiner zweiten Seite (22) sich erstreckt, wobei insbesondere das Federelement (20) einen zur ersten Achse (4.1) des Zylinderkerns (4) ausgerichteten gebogenen Verlauf aufweist, wobei insbesondere der gebogene Verlauf im Bereich der Öffnung (6) liegt.

8. Vorrichtung nach einem der vorhergehenden Ansprüche,
**dadurch gekennzeichnet,**
**dass** in der Zwischenstellung (II) des Zylinderkerns (4) das Federelement (20) nahezu parallel zur ersten Achse (4.1) verläuft.

9. Vorrichtung nach einem der vorhergehenden Ansprüche,
**dadurch gekennzeichnet,**
**dass** in der Nullstellung (0) und/oder in der Endstellung (III) des Zylinderkerns (4) das Federelement (20) sich in einer Ruhelage (20.1) befindet,
in der Zwischenstellung (II) und/oder Endstellung (III) des Zylinderkerns (4) das Federelement (20) sich in einer Sperrlage (20.2) befindet, wobei das Steuerglied (10) mit einer Kontur (11) ausgeführt ist, die während der Bewegung des Zylinderkerns (4) in seine jeweilige Stellung (0,I,II,III) auf das Federelement (20) wirkt, so dass das Federelement (20) sich in eine Richtung aus der Ruhelage (20.1) in die Sperrlage (20.2) bewegt, die im Wesentlichen zur ersten Achse (4.1) des Zylinderkerns (4) gerichtet ist, insbesondere die im Wesentlichen radial zur ersten Achse (4.1) des Zylinderkerns (4) gerichtet ist.

10. Vorrichtung nach einem der vorhergehenden Ansprüche,
**dadurch gekennzeichnet,**
**dass** der Zylinderkern (4) und das Steuerglied (10) ein gemeinsames Bauteil bilden oder der Zylinderkern (4) mit dem Steuerglied (10) drehfest verbunden ist.

11. Vorrichtung nach einem der vorhergehenden Ansprüche,
**dadurch gekennzeichnet,**
**dass** ein Schaltring (30) am Steuerglied (10) beweglich angeordnet ist, insbesondere das das Steuerglied (10) an seinem Randbereich (12), der dem Federelement (21) zugewandt ist, mit einer Ausnehmung (13) ausgeführt ist, in der der Schaltring (30) beweglich gelagert ist, insbesondere dass die Ausnehmung (13) eine Nut (13.1) aufweist, in die der Schaltring (30) mit einem Fußbereich (30.1) hineinragt und/oder dass der Schaltring (30) einen radial, nach außen sich erstreckenden Vorsprung (33) aufweist.

12. Vorrichtung nach einem der vorhergehenden Ansprüche,
**dadurch gekennzeichnet,**
**dass** der Zylinderkern (4) derart federbelastet ist, dass während der Bewegung des Zylinderkerns (4) zwischen der Nullstellung (0) und den jeweiligen Stellungen (I, II, III) ein Moment am Zylinderkern (4) angreift, das in Richtung der Nullstellung (0) wirkt und/oder dass die Ausnehmung (13) des Steuergliedes (10) einen ersten (14) und einen zweiten Anschlag (15) aufweist, wobei der Schaltring (30) ein erstes Ende (31) und ein zweites Ende (32) aufweist, wobei das erste Ende (31) des Schaltringes (30) dem ersten Anschlag (14) und das zweite Ende (32) des Schaltringes (30) dem zweiten Anschlag (15) zugewandt ist, wobei die Ausnehmung (13) nur teilweise durch den Schaltring (30) ausgefüllt ist.

13. Vorrichtung nach einem der vorhergehenden Ansprüche,
**dadurch gekennzeichnet,**
**dass** das Steuerglied (10) einen radial nach außen verlaufenden Nocken (18) aufweist, der in Nullstellung (0) und in Endstellung (III) an einem Anschlag (5.1, 5.2) des Gehäuses (3) anliegt und/oder dass das Steuerglied (10) mit einem einseitig offenen Freiraum ausgebildet ist, in den das Federelement (20) in der Endstellung (III) des Zylinderkerns (4) hineinragt.

14. Vorrichtung nach einem der vorhergehenden Ansprüche,
**dadurch gekennzeichnet,**
**dass** das Steuerglied (10) an seinem Randbereich (12) einen Freiraum (17) aufweist, in die sich das Federelement (20) in der Zwischenstellung (II) des Zylinderkerns (4) erstreckt, insbesondere der Freiraum (17) eine Steuerkurve (17.1) aufweist, die am Federelement (20) während der Bewegung des Zylinderkerns (4) von seiner Zwischenstellung (II) in die Nullstellung (0) und/oder in die Vorstellung (I) derart angreift, dass das Federelement (20) aus seiner Sperrlage (20.2) in die Ruhelage (20.1) sich verschwenkt.

15. Vorrichtung nach einem der vorhergehenden Ansprüche,
**dadurch gekennzeichnet,**
**dass** bei einer Bewegung des Zylinderkerns (4) aus seiner Nullstellung (0) in Richtung Endstellung (III) der Schaltring (30) mit seinem zweiten Ende (32) am zweiten Anschlag (15) anliegt und gleichzeitig der Freiraum (17) des Steuergliedes (10) verdeckt ist, wobei das erste Ende (31) des Schaltringes (30) zum ersten Anschlag (14) beabstandet ist und/oder dass bei der Bewegung des Zylinderkerns (4) aus der Endstellung (III) in die Zwischenstellung (II) der Vorsprung (33) des Schaltringes (30) als Anschlagelement für das Federelement (20) dient, um den Schaltring (30) in Richtung des ersten Anschlages (14) des Steuergliedes (10) zu bewegen.

16. Vorrichtung nach einem der vorhergehenden Ansprüche,
**dadurch gekennzeichnet,**
**dass** der Freiraum (17) mit einer Blockierfläche (17.2) ausgeführt ist, die dafür sorgt, dass eine erneute Bewegung des Zylinderkerns (4) in Richtung Endstellung (III) blockiert ist, wenn sich das Federelement (20) in der Zwischenstellung (II) befindet und/oder dass der Zylinderkern (4) einen Schlüsselkanal (4.2) aufweist, in den ein Schlüssel einsetzbar ist, wobei der Zylinderkern (4) eine innenliegende Stirnfläche (4.3) aufweist, die einer außenliegenden Stirnfläche (4.4), an der der Schlüssel einführbar ist, des Zylinderkerns (4) abgewandt ist, wobei die innenliegende Stirnfläche (4.3) in Wirkverbindung mit dem Schalter (40) ist.

## Claims

1. Device for the actuation of a lock element (1) of a steering column (2) of a vehicle, with a key cylinder, comprising a housing (3) and a cylindrical core (4) which is received in the housing and pivotable about an axis (4.1), which is pivotable from a zero position (0) in other angle staggered positions (I,II,III), as an interim position (II) and an end position (III),
a control part (10), which is mechanically coupled to a lock element (1), so that during a rotation of the cylindrical core (4) about a first axis (4.1) the lock element (1) can be positioned between a locking position and an unlocking position,
a switch (40), which determines different operational states of the vehicle according to the position of the cylinder core (4), wherein in the interim position (II) the motor of the vehicle is active after preceding an ignition of the motor of a vehicle occurred in the end position (III), and
a cranking replay control (20), which acts on the cylinder core (4) during an active motor of the vehicle, whereby a rerotation of the cylinder core (4) in the end position (III) is prevented,
**characterized in that**,
the cranking replay control (20) is accomplished as a spring element (20), which extends in the extending direction (R) of the cylinder core (4).

2. Device according to claim 1,
**characterized in that**,
the housing (3) comprises an opening (6) at which the spring element (20) is assembled.

3. Device according to claim 1 or 2,
**characterized In that**,
the spring element (20) acts radially on the cylinder core (4) and/or on to the control part (10) and/or that the spring element (20) is stationary attached to the housing (3) at a first side (21) and at a second side (22) is at the opening (6) of the housing (3) is embedded in a way that by a defined rotation of the cylinder core (4) a modification of the distance of the free edge of the second side (22) towards the axis (4.1) is achievable.

4. Device according to one of the preceding claims,
**characterized in that**,
upon movement of the cylinder core (4) between the zero position (0) and the interim position (II) the spring element (20) is deflected about an angle (α) particularly that the spring element (20) is pivotably mounted about a second axis (20.3) which proceeds warped towards the first axis (4.1).

5. Device according to one of the preceding claims,
**characterized in that**,
the spring element (20) is a steel spring.

6. Device according to one of the preceding claims,
**characterized in that**,
the zero position (0) the spring element (20) comprises a first initial spring load and that the spring element (20) in the interim position (II) comprises no or a second initial spring load, wherein particularly the second initial spring load is smaller than the first initial spring load.

7. Device according to one of the preceding claims,
**characterized in that**,
the housing (3) comprises an opening (6), through which the spring element (20) projects with the second side (22), wherein in particularly the spring element (20) comprises a curved run which is aligned towards the first axis (4.1) of the cylinder core (4) wherein particularly the curved run is in the area of the opening (6).

8. Device according to one of the preceding claims,
**characterized in that**,
in the interim position (II) of the cylinder core (4) the spring element (20) is almost parallel towards the first axis (4.1).

9. Device according to one of the preceding claims,
**characterized in that**,
in the zero position (0) and/or in the end position (III) of the cylinder core (4) the spring element (20) is in a rest position (20.1),
in the interim position (II) and/or in the end position (III) of the cylinder core (4) the spring element (20) is in a block position (20.2), wherein
the control part (10) comprises a contour (11), which acts on to the spring element (20) during the movement of the cylinder core (4) in its particular position (0,I,II,III), so that the spring element (20) moves into one direction from the rest position (20.1) into the block position (20.2), which is physically directed towards the first axis (4.1) of the cylinder core (4), particularly which is basically directed radial towards the first axis (4.1) of the cylinder core (4).

10. Device according to one of the preceding claims,
**characterized in that**,
the cylinder core (4) and the control pad (10) generate a corporate component or the cylinder core (4) is torque prove connected to the control pad (10).

11. Device according to one of the preceding claims,
**characterized in that**,
a switching ring (30) is moveably assembled at the control pad (10), particularly at the control pad (10) is accomplished at its border area (12), which is turned towards the spring element (20), with a recess (13), in which the switching ring (30) is movably mounted, particularly that the recess (13) comprises a notch (13.1), in which the switching ring (30) extends with a foot area (30.1) and/or that the switching ring (30) comprises a radial outwardly projecting projection (33).

12. Device according to one of the preceding claims,
**characterized in that**,
the cylinder core (4) is spring loaded in a way, that during the movement of the cylinder core (4) between the zero position (0) and the respective position (I, II, III) a moment is engaging at the cylinder core (4), that acts in the direction of the zero position (0) and/or that the recess (13) of the control pad (10) comprises a first (14) and a second arrester (15₎, wherein the switching ring (30) comprises a first edge (31) and a second edge (32) wherein the first edge (31) of the switching ring (30) is facing towards the first arrester (14) and the second edge (32) of the switching ring (30) is facing towards the second arrester (15), wherein the recess (13) is only partly completed by the switching ring (30).

13. Device according to one of the preceding claims,
**characterized in that**,
the control pad (10) comprises a radial output projecting cam (18), which in the zero position (0) and in the end position (III) abuts against an arrester (5.1, 5.2) of the housing (3) and/or that the control pad (10) is formed with a one sided open space, in which the spring element (20) is projecting in the end position (III) of the cylinder core (4).

14. Device according to one of the preceding claims,
**characterized in that**,
the control pad (10) comprises an indentation (17) at its border area (12), in which the spring element (20) is projecting in the interim position (II) of the cylinder core (4), particularly that the indentation (17) comprises a radial cam (17.1), which engages at the spring element (20) during the movement of the cylinder core (4) from its interim position (II) in the zero position (0) and/or in the start position (I) in a way that the spring element (20) is deviated from a block position (20.2) into a rest position (20.1).

15. Device according to one of the preceding claims,
**characterized in that**,
during the movement of the cylinder core (4) from its zero position (0) in the direction of the end position (III) the switching ring (30) abuts with its second edge (32) at the second arrester (15) and at the same time the indentation (17) hides the control pad (10), wherein the first edge (31) of the switching ring (30) is spaced towards the arrester (14) and/or that during movement of the cylinder core (4) from the end position (III) in the interim position (II) the projection (33) of the switching ring (30) serves as an arrester element for the spring element (20), in order to move the switching ring (30) in the direction of the first arrester (14) of the control pad (10).

16. Device according to one of the preceding claims,
**characterized In that**,
the indentation (17) is shaped with a blocking area (17.2), which is arranged that another movement of the cylinder core (4) in the direction of the end (III) is blocked, when the spring element (20) is in the interim position (II) and/or that the cylinder core (4) comprises a key passage (4.2), in which a key can be inserted, wherein the cylinder core (4) comprises an internal front surface (4.3), which is averted towards an external front surface (4.4), of the cylinder core (4) and to which the key can be inserted, wherein the internal front surface (4.3) is in an operative connection with the switch (40).

## Revendications

1. Dispositif de commande d'un organe de verrouillage (1) d'une colonne de direction (2) d'un véhicule automobile, comprenant
un cylindre de serrure qui présente un boîtier (3) et un noyau de cylindre (4) logé dans celui-ci et pouvant tourner autour d'un axe (4.1), qui, à partir d'une position zéro (0), peut tourner dans d'autres positions (I, II, III) décalées d'un angle les unes par rapport aux autres, comme une position intermédiaire (II) et une position finale (III),
un organe de commande (10) qui est couplé mécaniquement avec l'organe de verrouillage (1) de façon qu'en cas de rotation du noyau de cylindre (4) autour du premier axe (4.1), l'organe de verrouillage (1) peut être amené entre une position de verrouillage et une position de déverrouillage,
un commutateur (40) qui détermine différents états de fonctionnement du véhicule automobile en fonction de la position du noyau de cylindre (4), le moteur du véhicule étant actif dans la position intermédiaire (II) après qu'un allumage du moteur du véhicule a eu lieu préalablement dans la position finale (III), et
un blocage de démarrage (20) qui agit sur le noyau de cylindre (4) quand le moteur du véhicule est activé et a pour effet d'empêcher une nouvelle rotation du noyau de cylindre (4) dans la position finale (III),
**caractérisé en ce**
**que** le blocage de démarrage (20) est réalisé sous la forme d'un élément à ressort (20) qui s'étend dans la direction d'extension (R) du noyau de cylindre (4).

2. Dispositif selon la revendication 1,
**caractérisé en ce**
**que** le boîtier (3) présente un élément récepteur (6) sur lequel l'élément à ressort (20) est disposé.

3. Dispositif selon la revendication 1 ou 2,
**caractérisé en ce**
**que** l'élément à ressort (20) agit radialement sur le noyau de cylindre (4) et/ou sur l'organe de commande (10), et/ou que l'élément à ressort (20) est fixé d'un premier côté (21) de manière rigide au boîtier (3) et, d'un deuxième côté (22), monté sur l'élément récepteur (6) du boîtier (3) de façon qu'une rotation définie du noyau de cylindre (4) permette d'obtenir une variation de distance de l'extrémité libre du deuxième côté (22) par rapport à l'axe (4.1).

4. Dispositif selon une des revendications précédentes,
**caractérisé en ce**
**que** lors d'un mouvement du noyau de cylindre (4) entre la position zéro (0) et la position intermédiaire (II), l'élément à ressort (20) est dévié d'un angle (α), en particulier l'élément à ressort (20) est monté pivotant autour d'un deuxième axe (20.3) qui s'étend obliquement par rapport au premier axe (4.1).

5. Dispositif selon une des revendications précédentes,
**caractérisé en ce**
**que** l'élément à ressort (20) est un ressort en acier.

6. Dispositif selon une des revendications précédentes,
**caractérisé en ce**
**que** dans la position zéro (0), l'élément à ressort (20) présente une première tension initiale de ressort et dans la position intermédiaire (II) l'élément à ressort (20) ne présente aucune ou une deuxième tension de ressort, la deuxième tension de ressort étant en particulier plus faible que la première tension de ressort.

7. Dispositif selon une des revendications précédentes,
**caractérisé en ce**
**que** le boîtier (3) présente une ouverture (6) à travers laquelle l'élément à ressort (20) s'étend par son deuxième côté (22), l'élément à ressort (20) présentant en particulier une extension courbe par rapport au premier axe (4.1) du noyau de cylindre (4), l'extension courbe se situant en particulier dans la région de l'ouverture (6).

8. Dispositif selon une des revendications précédentes,
**caractérisé en ce**
**que** dans la position intermédiaire (II) du noyau de cylindre (4), l'élément à ressort (20) s'étend presque parallèlement au premier axe (4.1).

9. Dispositif selon une des revendications précédentes,
**caractérisé en ce**
**que** dans la position zéro (0) et/ou dans la position finale (III) du noyau de cylindre (4), l'élément à ressort (20) se trouve dans une position de repos (20.1),
dans la position intermédiaire (II) et/ou la position finale (III) du noyau de cylindre (4), l'élément à ressort (20) se trouve dans une position de blocage (20.2), l'organe de commande (10) étant réalisé avec un contour (11) qui, pendant le mouvement du noyau de cylindre (4) dans sa position respective (0, I, II, III), agit sur l'élément à ressort (20) de façon que l'élément à ressort (20) se déplace de la position de repos (20.1) dans la position de blocage (20.2) dans une direction qui est sensiblement orientée vers le premier axe (4.1) du noyau de cylindre (4), en particulier qui est sensiblement radiale par rapport au premier axe (4.1) du noyau de cylindre (4).

10. Dispositif selon une des revendications précédentes,
**caractérisé en ce**
**que** le noyau de cylindre (4) et l'organe de commande (10) forment un composant commun ou le noyau de cylindre (4) est relié de manière fixe en rotation à l'organe de commande (10).

11. Dispositif selon une des revendications précédentes,
**caractérisé en ce**
**qu'**une bague de commutation (30) est disposée de manière mobile sur l'organe de commande (10), en particulier que l'organe de commande (10) est réalisé, dans sa région de bord (12) qui est tournée vers l'élément à ressort (21), avec un évidement (13) dans lequel la bague de commutation (30) est montée de manière mobile, en particulier que l'évidement (13) présente une rainure (13.1) dans laquelle la bague de commutation (30) pénètre par une région de pied (30.1) et/ou que la bague de commutation (30) présente une saillie (33) qui s'étend radialement vers l'extérieur.

12. Dispositif selon une des revendications précédentes,
**caractérisé en ce**
**que** le noyau de cylindre (4) est sollicité par ressort de façon que pendant le mouvement du noyau de cylindre (4) entre la position zéro (0) et les positions respectives (I, II, III), un couple agit sur le noyau de cylindre (4), lequel agit en direction de la position zéro (0), et/ou que l'évidement (13) de l'organe de commande (10) présente une première (14) et une deuxième butée (15), la bague de commutation (30) présentant une première extrémité (31) et une deuxième extrémité (32), la première extrémité (31) de la bague de commutation (30) étant tournée vers la première butée (14) et la deuxième extrémité (32) de la bague de commutation (30) vers la deuxième butée (15), l'évidement (13) n'étant rempli que partiellement par la bague de commutation (30).

13. Dispositif selon une des revendications précédentes,
**caractérisé en ce**
**que** l'organe de commande (10) présente une came (18) qui s'étend radialement vers l'extérieur, qui s'appuie dans la position zéro (0) et dans la position finale (III) sur une butée (5.1, 5.2) du boîtier (3) et/ou que l'organe de commande (10) est réalisé avec un espace libre ouvert d'un côté, dans lequel l'élément à ressort (20) pénètre dans la position finale (III) du noyau de cylindre (4).

14. Dispositif selon une des revendications précédentes,
**caractérisé en ce**
**que** l'organe de commande (10) présente dans sa région de bord (12) un espace libre (17) dans lequel l'élément à ressort (20) s'étend dans la position intermédiaire (II) du noyau de cylindre (4), en particulier que l'espace libre (17) présente une came de commande (17.1) qui agit sur l'élément à ressort (20) pendant le mouvement du noyau de cylindre (4) de sa position intermédiaire (II) dans la position zéro (0) et/ou dans la position préliminaire (1) de façon que l'élément à ressort (20) pivote de sa position de blocage (20.2) dans la position de repos (20.1).

15. Dispositif selon une des revendications précédentes,
**caractérisé en ce**
**que** lors d'un mouvement du noyau de cylindre (4) de sa position zéro (0) en direction de la position finale (III), la bague de commutation (30) s'appuie par sa deuxième extrémité (32) sur la deuxième butée (15) et en même temps l'espace libre (17) de l'organe de commande (10) est couvert, la première extrémité (31) de la bague de commutation (30) étant espacée de la première butée (14) et/ou que lors du mouvement du noyau de cylindre (4) de la position finale (III) dans la position intermédiaire (II), la saillie (33) de la bague de commutation (30) sert d'élément de butée pour l'élément à ressort (20) pour déplacer la bague de commutation (30) en direction de la première butée (14) de l'organe de commande (10).

16. Dispositif selon une des revendications précédentes,
**caractérisé en ce**
**que** l'espace libre (17) est réalisé avec une surface de blocage (17.2) qui fait en sorte qu'un nouveau mouvement du noyau de cylindre (4) en direction de la position finale (III) soit bloqué lorsque l'élément à ressort (20) se trouve dans la position intermédiaire (II) et/ou que le noyau de cylindre (4) présente un canal de clé (4.2) dans lequel une clé peut être insérée, le noyau de cylindre (4) présentant une face frontale intérieure (4.3) qui est opposée à une face frontale extérieure (4.4), sur laquelle la clé peut être introduite, du noyau de cylindre (4), la face frontale intérieure (4.3) étant en liaison fonctionnelle avec le commutateur (40).
